# EUROPEAN PATENT SPECIFICATION

(11) **EP 4 048 458 B1**
(45) Date of publication and mention of the grant of the patent: **01.11.2023**
(21) Application number: 21759021.5
(22) Date of filing: 22.06.2021
(51) Int. Cl.: B21D 37/12, B21D 39/04, F16L 33/00

(54) **DEVICE FOR CRIMPING THE END CONNECTOR ON A HOSE OR PIPE**
VORRICHTUNG ZUM CRIMPEN DES ENDVERBINDERS AN EINEM SCHLAUCH ODER ROHR
DISPOSITIF DE SERTISSAGE DE RACCORD D'EXTRÉMITÉ SUR UN FLEXIBLE OU UN TUYAU

(30) Priority: 25.06.2020 CZ 20200036
(43) Date of publication of application: 31.08.2022
(73) Proprietor: MSV SYSTEMS CZ s.r.o., 460 01 Liberec (CZ)
(72) Inventor: TICHY, David, 463 03 Straz nad Nisou (CZ); KREJCIK, Miroslav, 460 10 Liberec, Liberec XVIII-Karlinky (CZ)
(74) Representative: Musil, Dobroslav
(86) International application number: PCT/CZ2021/050068
(87) International publication number: WO 2021/259402

(56) References cited:
- JP-A- 2019 051 539
- US-A- 771 921
- US-A- 3 731 518
- US-A- 4 989 443

## Description

### Technical field

The invention relates to a device for crimping the end connector on a hose or pipe, comprising a carrier disc which is in its longitudinal axis provided with a central longitudinal opening and which is in a radial dividing plane divided into a first part and a second part which are separable from each other, wherein in the carrier disc, swages are reversibly linearly slidably mounted in a beam-like manner around the central opening. The swages are provided at their end at the central hole with a pressing surface or surfaces for crimping the end connector onto the hose or pipe, the swages being coupled to a press drive for synchronized movement of all the swages radially with respect to the central opening towards and away from the longitudinal axis.

### Background art

To connect hoses to various devices, special end connectors are used, which are pressed onto the end of the hose. This process is generally called crimping.

These end connectors typically comprise an inner tube which is inserted into the inner space of the hose end and these end connectors further contain an outer tube which is slid onto the outer surface of the hose end and then pressed from the outer side around the circumference of the hose towards the inner tube. By deforming the outer tube and the hose wall material, the hose and the end connector are joined together form-fittingly and tightly, so that the hose can be easily connected to the desired connection point by means of the end connector thus crimped.

US 3 731 518 A discloses a crimping device, especially for crimping fittings of high-pressure hydraulic hoses and the like, which comprises two die bodies, each of which is housed in one spatial frame. In the centre between the two die bodies, an empty space is formed for inserting the end of the hose with a crimping fitting, i.e., an empty space for crimping the crimping fitting onto the end of the hose, wherein radially adjustable fingers are arranged radially in the die around the crimping space, which are provided at their ends at the crimping space with a crimping profile by which the fingers are pressed into the outer tube of the crimping end at the end of the hose. The fingers are coupled to a drive for their longitudinal movement, i.e., in the direction radially towards and away from the crimping space, so that uniform crimping of the end fitting on the hose and the like is achieved and the crimped fitting can withstand high pressures in the hose and, moreover, its crimped part is symmetrical.

The disadvantage of this arrangement is a split die on a massive frame, which limits the achievable crimping pressures and leads to a manufacturing and space-intensive design and at the same time requires the use of a die-to-frame device for spacing the die bodies from the frame. Another disadvantage is the necessity to create an independent powerful drive for each part of the split die, which further increases the complexity of the device and, in addition, increases the risk of failure of the synchronisation of the stroke of the fingers and the uniformity of the crimped connection between the end fitting and the hose.

US 4 989 443 A describes an improved design of the device according to US 3 731 518, in which the actuation of radial swages is provided for each half of the split die, wherein within each half of the die, the actuation of the swages is further divided into two branches, i.e., into a left side and a right side, wherein each branch is provided with a quarter-circle collar with inclined surfaces which abut the rear ends of the swages, both collars being resiliently and reversibly slidably mounted in the die along a circular path around the crimping space. On mutually adjacent parts, both collars of one half of the die are provided with an inclined surface, wherein an expanding wedge is directed into the wedge gap thus formed, adapted to move the two collars away from each other, which is transmitted via said inclined surfaces to the ends of the swages, which thus move towards the crimping space. The whole assembly requires a massive frame for each half of the die adapted to be placed between the rams of the press. Another disadvantage is the necessity to create an independent powerful actuator for each part of the split die, which further increases the complexity of the device and increases the risk of failure of the synchronization of the stroke of the swages and of the uniformity of the crimp connection of the end connector and the hose.

JP 2019 051 539 A discloses a crimping device which comprises a onepiece die with a circular shape, in which swages are arranged radially around a crimping space, inclined surfaces being assigned to the outer ends of the swages on an eccentric ring, which is rotatably mounted around the outer circumference of the die in the frame of the crimping device. The eccentric ring is coupled to a drive of its rotation about the longitudinal axis of the crimping space, for example it is coupled to a linear drive. The swages and the eccentric ring are formed by a set of elements arranged one behind the other for gradually crimping the crimping end connector in the direction of the length of the crimping end connector. The disadvantage of this arrangement is the closed construction of the die, additionally supplemented by the drive of the swages by means of rings rotatable around the die, which requires, among other things, a relatively massive frame around the eccentric ring, as well as a relatively massive design of the eccentric ring.

US 771 921 A discloses a crimping device comprising a set of gear wheels having the axis of rotation parallel to the longitudinal axis of the opening. US 771 921 A further discloses a set of swages, wherein one gear wheel is always assigned to one swage and the axis of rotation of the gear wheels intersects the longitudinal axis of the respective swage. US 771 921 A does not disclose that the adjacent gear wheels of the set of gear wheels which move the swages would engage each other. Neither is there any indication of a carrier disc with a radial dividing plane and which disc would have the gearwheels mounted on.

Furthermore, a common disadvantage is difficult adjustability and operability of the device when changing the dimensions of the crimping end connectors and hoses, etc.

Known are also solutions of crimping heads with an individual drive of each swage by means of a separate hydraulic cylinder, wherein each hydraulic cylinder works essentially independently and with its own internal resistors, which means that the individual swages descend to a defined position adjustable by mechanical grinding or by the underlaying of the swages, and therefore do not descend in the same way at a precisely defined time, which results in elliptical deformation of the originally circular cross-sections of the crimped parts, which is unacceptable.

The object of the invention is to eliminate or at least reduce the disadvantages of the background art.

### Principle of the invention

The object of the invention is achieved by a device for crimping the end connector onto a hose or pipe according to claim 1, whose principle consists in the fact that a press drive comprises a set of gear wheels with outer teeth, which are rotatably mounted in a carrier disc, and the axis of rotation of the gearwheels is parallel to the longitudinal axis of the carrier disc, the adjacent gear wheels engage each other with their outer teeth and one of the gear wheels is coupled to a drive, one gear wheel being always assigned to one swage, the axis of rotation of the gear wheels intersects the longitudinal axis of the respective swage and the gear wheel is coupled to the respective swage by an eccentric gear for controlled bidirectional sliding movement of the swage.

The advantages of this configuration include precise dosing of even high pressing pressure at small dimensions of the device, high durability and performance of the press drive and high reliability of the device. Another advantage is the relatively easy adjustability of the device for crimping the end connector onto other hoses or pipes. The advantage of this solution is the defined stroke of all the swages, at a precisely defined time, thanks to the mechanical linkage of the swages and their cams via the gear wheels and their mechanical (tooth) backlash, which can be eliminated. For making the best possible quality crimp hinge, uniform compression around the entire circumference of the parts to be joined is required, within a very strict tolerance. The advantage of the cam drive of the swages is also the fact that it provides wide possibilities of setting the stroke of the swages, when by rotating the cams through the system drive (servo)-gear wheels-cam (on individual swages) it is possible to achieve a precise run-down-compression (adjustable by setting the parameter of the rotation of the system drive-gear wheels-cams) and, as a result, controlled compression of the crimped parts is also achieved.

Preferred embodiments of the invention are the subject-matter of the dependent claims.

### Description of drawings

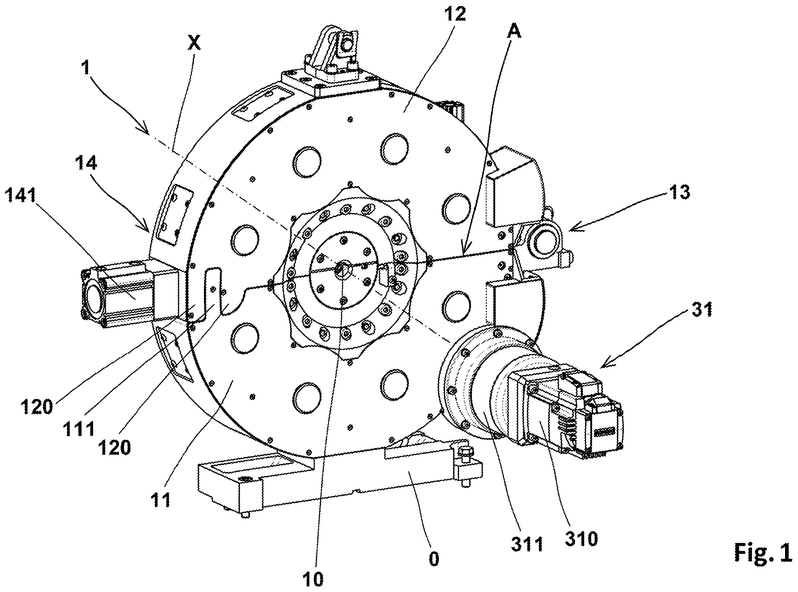

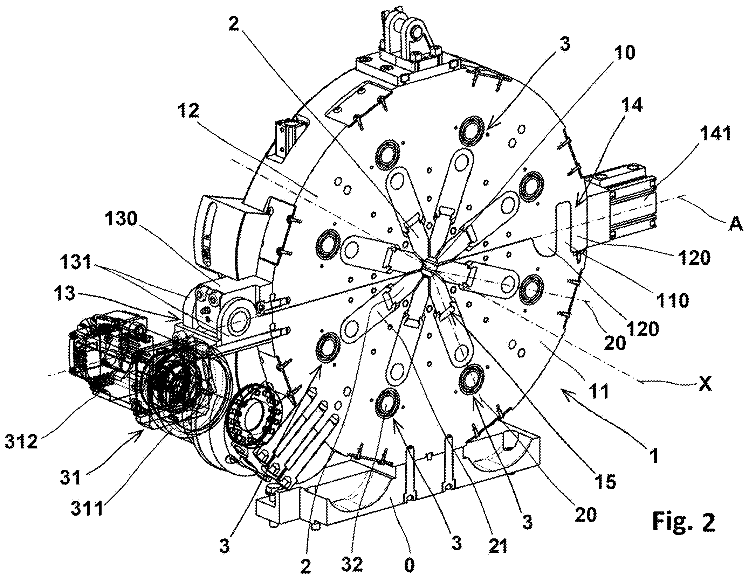

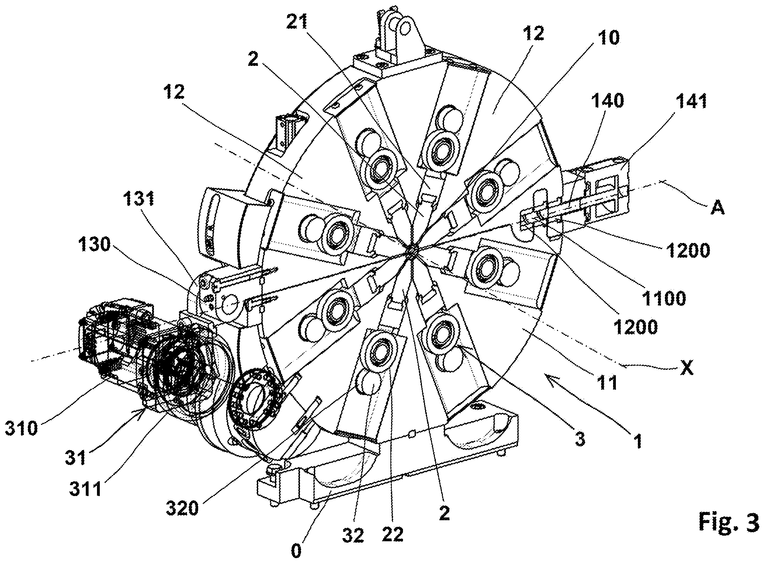

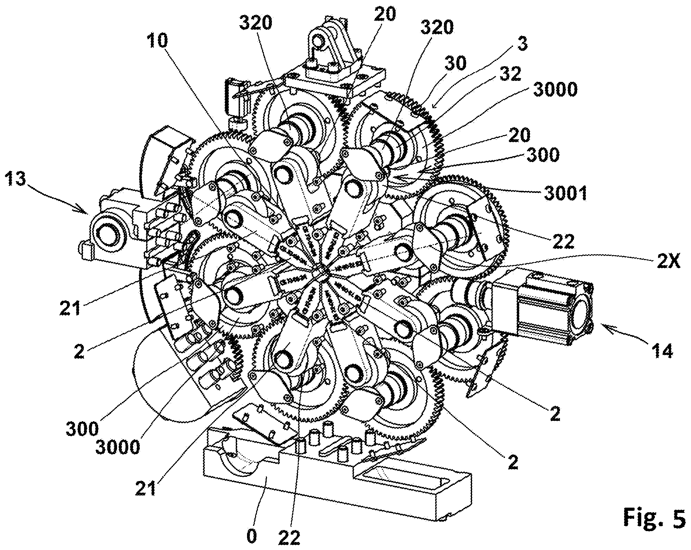

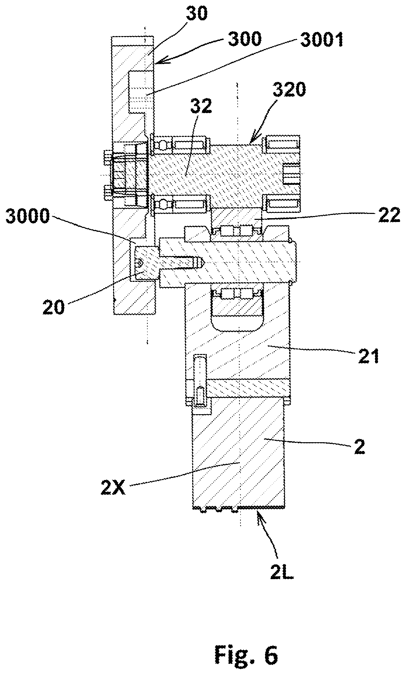

The invention is schematically represented in a drawing, wherein Fig. 1 shows an overall spatial arrangement of the device according to the invention from the front, Fig. 2 shows the spatial arrangement of the device according to the invention in cross section along the plane I-I from the front, Fig. 3 shows the spatial arrangement of the device according to the invention in cross section along the plane II-II from the front, Fig. 4 shows the spatial arrangement of the device according to the invention in cross section along the plane III-III from the rear, Fig. 5 shows the spatial arrangement of the press drive with gear wheels, swages and pulleys and Fig. 6 shows a detail of the arrangement of one part of the press drive with a gearwheel and associated swage and pulleys.

### Examples of preferred embodiments

A device for crimping an end connector on a hose or pipe or "a crimping head" comprises a carrier disc **1**, which is in its longitudinal axis **X** provided with a central longitudinal opening **10**. The carrier disc **1** is radially in the dividing plane **A** divided into a first part **11** and a second part **10**, wherein the two parts are mutually tiltable from each other by means of a hinge **13** arranged at one end of the dividing plane **A** of the two parts **11**, **12**. On the opposite end of the dividing plane **A**, each part **11**, **12** of the carrier disc **1** is provided with one part of a locking node **14**. In a practical embodiment, the lower part **11** of the carrier disc **1** is mounted on a holder and the upper part **10** is tiltable upwards.

In an embodiment shown, the hinge **13** comprises a pair of eyes **130**, **131**, each of which is arranged on one of the parts **11**, **12** of the carrier disc **1**, wherein in the eyes is arranged a common pin **132**, which is parallel to the longitudinal axis **X** of the carrier disc **1** and on which the two parts **11**, **12** of the carrier disc **1** are mutually tilted away from the dividing plane **A**. In the exemplary embodiment shown, the lower part **11** of the carrier disc **1** is mounted on the device **0**, so that the upper part **12** of the carrier disc **1** on the hinge 13 is tilted away from the dividing plane **A** upwards, whereby the device also opens to insert and remove the pressed parts and closes for performing the pressing. In an unillustrated exemplary embodiment, the hinged connection of the two parts **11**, **12** of the carrier disc **1** is implemented in a different suitable manner and by using different means.

In the embodiment shown, the locking node **14** is formed by a pair or a trio of mutually overlapping tangential projections **110**, **120** of the two parts **11**, **12** of the carrier disc **1**, wherein these tangential projections **110**, **120** are provided with a radially arranged through hole **1100**, **1200**, into which a locking pin **140** operated by a locking drive **141**, here exemplarily a linear motor, is inserted when the carrier disc **1** is closed, i.e., when the two parts **11**, **12** of the carrier disc **1** are together. In the unillustrated exemplary embodiment, the locking node **14** is implemented in a different suitable manner and by using different means.

In the carrier disc **1**, linear guides **15** are formed radially around the central opening **10** in which swages **2** are reversibly linearly slidably arranged. The swages **2** are at their ends at the central opening **10** provided with a crimping surface **2L** or surfaces for crimping the end connector onto a hose or pipe.

At their opposite end, the swages **2** are coupled to the press drive **3** which ensures synchronised movement of all swages **2** around the entire circumference of the central opening **10** in the direction towards the longitudinal axis **X** and away from the longitudinal axis **X**.

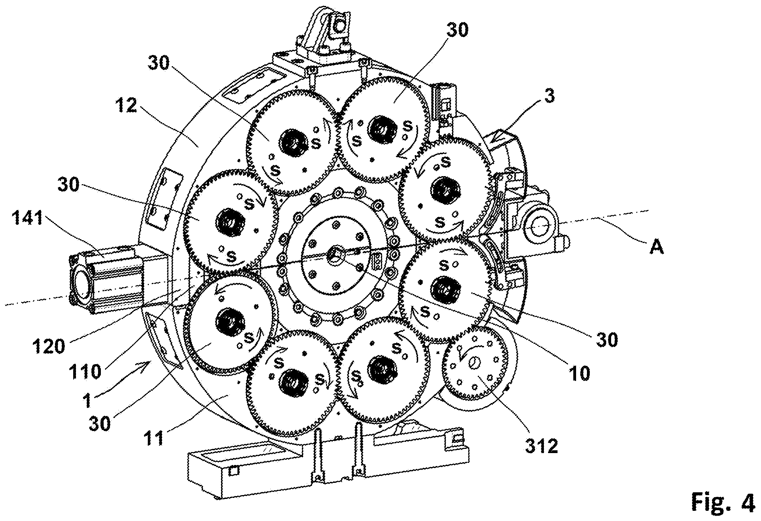

The crimping drive **3** comprises a set of gear wheels **30**, which are rotatably mounted in the carrier disc **1**, wherein each swage **2** is assigned to one gear wheel **30** with outer teeth, whose axis of rotation is parallel to the longitudinal axis **X** of the carrier disc **1** and at the same time passes through the longitudinal axis **2X** of the respective swage **2**. Adjacent gear wheels **30** engage each other with their outer teeth, wherein one of these gear wheels **30** is further coupled to a drive **31**, formed here, for example, by a rotary motor **310** which is connected via the gearbox **311** "in slow motion" to the drive gear **312**, which is rotatably mounted in the carrier disc **1** and with its outer teeth engages with the above-mentioned single gear wheel **30**. Thus, all the gear wheels **30** constitute a closed circuit transmitting the torque of the drive **31** in the direction of the arrows **5** in Fig. 4.

In the exemplary embodiment shown, the eccentric gearing is implemented in such a way that in one of its front faces **300,** the gear wheel **30** is provided with a circular circumferential groove **3000** with an eccentric elevation **3001**. A first pulley **20** extends into the circumferential groove **3000** and projects laterally from the end of the respective swage **2**, or if the swage **2** is short, then the first pulley **20** projects laterally from the end of the extension piece **21** which is coupled to the swage **2** at its other end. A second pulley **22** is arranged at the far end of the swage **2** or at the far end of the extension piece **21**. The second pulley **22** abuts the eccentric circumferential surface **320** formed on a shaft **32** of the respective gear wheel **30**, into whose circumferential groove **3000** the first pulley **20** extends on the same swage **2** or on the same extension piece **21**. The eccentric circumferential surface **320** and the circular circumferential groove **3000** with an eccentric elevation **3001** thus essentially constitute pressing cams, which, in the exemplary embodiment shown, are attached firmly to the shaft **32** with gear wheels **30**.

In the exemplary embodiment shown, the carrier disc **1** comprises 8 (eight) swages **2**, 8 gearwheels **30**, etc., all symmetrically distributed around the central opening **10**, wherein in each part **11**, **12** of the carrier disc **1**, half the number of the swages **2** are mounted, half the number of the gear wheels **30**, etc. In an exemplary embodiment (not shown), the carrier disc **1** comprises 6 (six) swages **2**, 6 gearwheels **30**, etc., all symmetrically distributed around the central opening **10**, wherein in each part **11**, **12** of the carrier disc **1**, half the number of the swages **2** are mounted, half the number of the gear wheels **30**, etc. In another unillustrated exemplary embodiment, the carrier disc **1** comprises 4 (four) swages **2**, 4 (four) gear wheels **30**, etc., all symmetrically distributed around the central opening **10**, wherein in each part **11**, **12** of the carrier disc **1**, half the number of the swages **2** are mounted, half the number of the gear wheels **30**, etc. In another unillustrated exemplary embodiment, the carrier disc **1** comprises 10 (ten) swages **2**, 10 gear wheels **30**, etc., all symmetrically distributed around the central opening **10**, wherein in each part **11**, **12** of the carrier disc **1,** half the number of the swages **2** are mounted, half the number of the gear wheels **30**, etc. In another exemplary embodiment (not shown), the carrier disc **1** comprises an odd number of swages **2**, an odd number of gearwheels **30**, etc., all asymmetrically distributed around the central opening **10**, wherein in each part **11**, **12** of the carrier disc **1** the number of the swages **2**, the number of the gear wheels **30** mounted, etc., is one unit larger than in the second part **11**, **12** of the carrier disc **1**.

In another unillustrated exemplary embodiment, the carrier disc **1** is divided into asymmetrical parts **11**, **12**. Typically, the dividing plane **A** of the carrier disc **1** is bent at least once, wherein in each part **11**, **12** of the carrier disc **1** a suitable number of swages **2**, gear wheels **30**, etc., is mounted, according to the size of the particular part **11**, **12** and the number of swages **2**, gear wheels **30**, etc., in each part **11**, **12** of the carrier disc **1** varies, even by more than one unit.

The device for crimping the end connector on a hose or pipe according to the invention operates in such a manner that either the two parts **11**, **12** of the carrier disc 1 are tilted from each other at the hinge **13** to insert the crimped end of the hose or tube with the connector into the central hole **10** when the locking node **14** is unlocked, or the crimped end of the hose or tube with the connector is inserted into the central hole **10** when the locking node **14** is locked and when these parts **11**, **12** of the carrier disc **1** are mutually tilted.

To insert the crimped end of the hose or tube with the connector into the central opening do **10,** this end of the hose or tubes with the respective end connector fitted, is arranged between the pressing surfaces of the swage **2** around the entire circumference of the pressed part of the end connector.

The adjust the crimp depth, i.e., the value of each crimp **2** run-down towards the centre of the device, i.e., towards the centre of the hose or pipe with the respective end connector fitted, the drive **31** is rotated by the required number of revolutions, for example, by entering a value on a control panel (not shown) of the control device.

Subsequently, the crimping sequence of the drive **31** is initiated, which includes rotation of the drive **31** that is transmitted to the rotation of each of the gear wheels **30**, during which the first pulleys **20** on the swages **2** (or on the extension pieces **21**) are guided along the circumferential grooves **3000** with the eccentric elevation **3001** in the end face **300** of each respective gear **30** and at the same time, the second pulleys **22** on the swages **2** (or on the extension parts **21**) roll down the eccentric circumferential surface **320** on the shaft **32** of each respective gear wheel 30. Thereby, the rotational movement of each respective gear wheel 30 is converted into a linear reciprocating movement of each respective swage 2, which with its pressing surface first approaches the pressed end connector and sinks into it in its designated part of the circumferential surface of the crimped end connector, by which the crimping of the end connector into the end part of the hose or pipe, the so-called crimping, is performed along the entire circumference of the crimped end connector by all swages 2 along the entire circumference of the hose or pipe with the respective end connector fitted at the same time and identically and equally accurately. Then the drive **31** is rotated backwards and the gear wheels **30** with it, so that the swages **2** again move away from the circumferential surface of the already crimped end connector and the drive **31** stops. Subsequently, the hose or pipe with the crimped end connector is removed from the device, either directly without the two parts **11**, **12** of the carrier disc **1** on the hinge **13** being tilted off, or se the hose or tube with the crimped end connector is removed from the device after unlocking the locking node **14** and after the two parts **11**, **12** of the carrier disc **1** on the hinge **13** have been mutually tilted away from each other.

The device is now ready for the insertion of a new hose or pipe with an end connector which is to be crimped.

## Claims

1. A device for crimping an end connector on a hose or pipe, comprising a carrier disc (1) which is in its longitudinal axis (X) provided with a central longitudinal opening (10) and which is in a radial dividing plane (A) divided into a first part (11) and a second part (10) which are mutually separable, wherein in the carrier disc (1), swages (2) are reversibly linearly slidably mounted radially around the central opening (10), the swages being provided at their end at the central opening (10) with a pressing surface or surfaces for crimping the end connector on a hose or pipe, wherein the swages (2) are coupled to a press drive (3) for the synchronized movement of all swages (2) radially relative to the central opening (10) towards the longitudinal axis (X) and away from the longitudinal axis (X), **characterized in that** the press drive (3) comprises a set of gear wheels (30) with outer teeth, which are rotatably mounted in the carrier disc (1), and the axis of rotation of the gear wheels (30) is parallel to the longitudinal axis (X) of the carrier disc (1), adjacent gear wheels (30) engage each other with their outer teeth and one of the gear wheels (30) is coupled to a drive (31), one gear wheel (30) is always assigned to one swage (2), the axis of rotation of the gear wheels (30) intersects the longitudinal axis (20) of the respective swage (2) and the gear wheel (30) is coupled to the respective swage (2) by an eccentric gear for controlled bidirectional sliding movement of the swage (2).

2. The device according to claim 1, **characterized in that** each gear (30) is provided in one of its end faces (300) with a circular circumferential groove (3000) with an eccentric elevation (3001), whereby a first pulley (20), which projects from the respective swage (2), extends to the circumferential groove (3000), the swage (2) is provided at its end with a second pulley (22) which abuts the eccentric circumferential surface (320) on the shaft (32) of the respective gear (30).

3. The device according to claim 1 or 2, **characterized in that** the drive (31) consists of a rotary motor (310), which is connected via a gearbox (311) to slow to a drive gear (312), which is rotatably mounted in the carrier disc (1) and engages with one gear wheel (30) by its outer teeth.

4. The device according to any one of claims 1 to 3, **characterized in that** the carrier disc (1) is divided into two parts (11, 12), which are tiltable from each other on a hinge (13) which is arranged at one end of the dividing plane (A) of the two parts (11, 12), wherein at the opposite end of the dividing plane (A) of the two parts (11, 12), each part (11, 12) of the carrier disc (1) is provided with one part of **a locking node** (14).

5. The device according to claim 4, **characterized in that** the hinge (13) comprises a pair of eyes (130, 131), each of which is arranged on one of the parts (11, 12) of the carrier disc (1), wherein arranged in the eyes is a common pin (132), which is parallel with the longitudinal axis (X) of the carrier disc (1), wherein the lower part (11) of the carrier disc (1) is mounted on the frame (0) of the device and the upper part (12) of the carrier disc (1) is tiltable on the hinge (13) from the dividing plane (A) upwards.

6. The device according to claim 4, **characterized in that** the locking node (14) comprises a pair or a trio of overlapping tangential projections (110, 120) of the two parts (11, 12) of the carrier disc (1), wherein these tangential projections (110, 120) are provided with a radially arranged through hole (1100, 1200), to which is assigned a plug-in locking pin (140) coupled to a locking drive (141).

7. The device according to any one of claims 1 to 6, **characterized in that** in the carrier disc (1), around the central opening (10), an even number of swages (2) are mounted, which are coupled to an even number of gear wheels (30), wherein half the number of swages (2) and half the number of gear wheels (30) are mounted in each part (11, 12) of the carrier disc (1), wherein the carrier disc (1) is divided into symmetrical parts (11, 12).

8. The device according to any one of claims 1 to 6, **characterized in that** an odd number of swages (2) are mounted symmetrically around the central opening (10) in the carrier disc (1), the swages (2) being coupled to an odd number of gear wheels (30), wherein in each part (11, 12) of the carrier disc (1), a different number of swages (2) and a different number of gear wheels (30) are mounted, the carrier disc (1) being divided into asymmetrical parts (11, 12).

## Patentansprüche

1. Einrichtung zum Crimpen eines Endsteckers auf einen Schlauch oder ein Rohr, die eine Trägerscheibe (1) aufweist, die in ihrer Längsachse (X) eine Zentralöffnung (10) aufweist und in der radialen Trennungsebene (A) in einen ersten Teil (11)und in einen zweiten Teil (12) unterteilt ist, die voneinander trennbar sind, wobei in der Trägerscheibe (1) um die Zentralöffnung (10) herum Schmiedewerkzeuge (2) umkehrbar linear verschiebbar strahlenförmig gelagert sind, die an ihrem Ende an der Zentralöffnung (10) eine Pressfläche oder Pressflächen zum Crimpen des Endsteckers auf einen Schlauch oder ein Rohr aufweisen, wobei die Schmiedewerkzeuge (2) mit einem Pressantrieb (3) zur synchronisierten Bewegung aller Schmiedewerkzeuge (2) radial gegenüber der Zentralöffnung (10) zur Längsachse (X) und von der Längsachse (X)verkoppelt sind, **dadurch gekennzeichnet, dass** der Pressantrieb (3) einen Satz von Zahnrädern (30) mit einer Außenverzahnung aufweist, die in der Trägerscheibe (1) drehbar gelagert sind, und die Drehachse der Zahnräder (30) parallel zur Längsachse (X) der Trägerscheibe (1) liegt, benachbarte Zahnräder (30) mit ihrer Außenverzahnung ineinander eingreifen und eines der Zahnräder (30) mit dem Antrieb (31) verkoppelt ist, jeweils ein Zahnrad (30) einem Schmiedewerkzeug (2) zugeordnet ist, die Drehachse der Zahnräder (30) die Längsachse (20) desjeweiligen Schmiedewerkzeuges (2) schneidet und das Zahnrad (30) über ein Exzentergetriebe mit dem jeweiligen Schmiedewerkzeug (2) zur gesteuerten bidirektionalen Gleitbewegung des Schmiedewerkzeuges (2) verkoppelt ist.

2. Einrichtung nach dem Anspruch 1, **dadurch gekennzeichnet, dass** jedes Zahnrad (30) auf einer seiner Stirnflächen (300) eine kreisförmige Umfangsnut (3000) mit einem exzentrischen Vorsprung (3001) aufweist, in die Umfangsnut (3000) die erste Rolle (20) eingreift, die aus dem jeweiligen Schmiedewerkzeug (2) austritt, das Schmiedewerkzeug (2) an seinem Ende die zweite Rolle (22) aufweist, die auf der exzentrischen Umfangsfläche (320) auf der Welle (32) des jeweiligen Zahnrades (30) aufliegt.

3. Einrichtung nach dem Anspruch 1 oder 2, **dadurch gekennzeichnet, dass** der Antrieb (31) durch einen Drehmotor (310) gebildet wird, der über ein Getriebe zu langsam (311) an ein Antriebszahnrad (312) angeschlossen ist, das in der Trägerscheibe (1) drehbar gelagert ist und mit ihrer Außenverzahnung mit einem Zahnrad (30) eingreift.

4. Einrichtung nach einem der Ansprüche 1 bis 3, **dadurch gekennzeichnet, dass** die Trägerscheibe (1) in zwei Teile (11, 12) unterteilt ist, die auf einem Gelenk (13) gegenseitig aufklappbar sind, das an einem Ende der Trennungsebene (A) beider Teile (11, 12) angeordnet ist, wobei an dem anderen Ende der Trennungsebene (A) beider Teile(11, 12) jeder Teil (11, 12) der Trägerscheibe (1) einen Teil eines Verriegelungsknotens (14) aufweist.

5. Einrichtung nach dem Anspruch 4, **dadurch gekennzeichnet, dass** das Gelenk (13) ein Paar der Ösen (130, 131) aufweist, von denen jede an einem der Teile (11, 12) der Trägerscheibe (1) angeordnet ist, wobei in den Ösen ein gemeinsamer Bolzen (132) angeordnet ist, der zur Längsachse (X) der Trägerscheibe (1) parallel laufend ist, wobei der untere Teil (11) der Trägerscheibe (1) auf einem Rahmen (0) der Einrichtung gelagert ist und der obere Teil (12) der Trägerscheibe (1) auf dem Gelenk (13) von der Trennungsebene (A) nach oben aufklappbar ist.

6. Einrichtung nach dem Anspruch 4, **dadurch gekennzeichnet, dass** der Verriegelungsknoten (14) ein Paar oder drei gegenseitig überragende Tangentialvorsprünge (110, 120) beider Teile (11, 12) der Trägerscheibe (1) aufweist, wobei diese Tangentialvorsprünge (110, 120) radial angeordnete Durchgangsöffnung (1100, 1200) aufweisen, der ein Steckverriegelungsbolzen (140) zugeordnet ist, der mit dem Verriegelungsantrieb (141) verkoppelt ist.

7. Einrichtung nach einem der Ansprüche 1 bis 6, **dadurch gekennzeichnet, dass** in der Trägerscheibe (1) um die Zentralöffnung (10) herum symmetrisch eine gerade Zahl der Schmiedewerkzeuge (2) gelagert ist, die mit der geraden Zahl der Zahnräder (30) verkoppelt sind, wobei in jedem Teil (11, 12) der Trägerscheibe (1) die Hälfte der Zahl der Schmiedewerkzeuge (2) und die Hälfte der Zahl der Zahnräder (30) gelagert sind, wobei die Trägerscheibe (1) in symmetrische Teile (11, 12) unterteilt ist.

8. Einrichtung nach einem der Ansprüche 1 bis 6, **dadurch gekennzeichnet, dass** in der Trägerscheibe (1) um die Zentralöffnung (10) herum symmetrisch eine ungerade Zahl der Schmiedewerkzeuge (2) gelagert ist, die mit der ungeraden Zahl der Zahnräder (30) verkoppelt sind, wobei in jedem Teil (11, 12) der Trägerscheibe (1) unterschiedliche Zahl der Schmiedewerkzeuge (2) und unterschiedliche Zahl der Zahnräder (30) gelagert sind, wobei die Trägerscheibe (1) in unsymmetrische Teile (11, 12) unterteilt ist.

## Revendications

1. Dispositif pour presser un connecteur d'extrémité sur un tuyau ou un tube, muni d'un disque porteur (1) qui est, sur son axe longitudinal (X), pourvu d'une ouverture centrale longitudinale (10) et qui est, dans un plan de division radiale (A), divisé en une première partie (11) et une deuxième partie (10), les deux étant séparables, tandis que le disque porteur (1) dispose de tas de forgeage (2), montés de manière linéaire réversible et coulissante en forme radiale autour de l'ouverture centrale (10), pourvus à leur extrémité au niveau de l'ouverture centrale (10) d'une ou plusieurs surfaces de sertissage pour sertir le connecteur d'extrémité sur le tuyau ou le tube, tandis que les tas de forgeage (2) sont couplés à un entraînement de sertissage (3) pour un mouvement synchronisé de tous les tas de forgeage (2) de manière radiale par rapport à l'ouverture centrale (10) vers l'axe longitudinal (X) et à partir de celui-ci, **caractérisé en ce que** l'entraînement de sertissage (3) comprend un ensemble d'engrenages (30) avec engrenages externes qui sont montés de manière rotative dans le disque porteur (1), où l'axe de rotation des engrenages (30) est parallèle à l'axe longitudinal (X) du disque porteur (1), les engrenages adjacents (30) s'engrènent avec leurs engrenages externes et l'un des engrenages (30) est couplé à l'entraînement (31), chaque engrenage (30) est rattaché à un tas de forgeage (2), l'axe de rotation des engrenages (30) coupe l'axe longitudinal (20) du tas de forgeage (2) respectif et l'engrenage (30) est couplé au tas de forgeage (2) respectif par un engrenage excentrique pour un mouvement de glissement bidirectionnel contrôlé du tas de forgeage (2).

2. Dispositif selon la revendication 1, **caractérisé en ce que** chaque engrenage (30) est pourvu dans une de ses faces (300) d'une rainure circulaire circonférentielle (3000) munie d'une saillie excentrique (3001), la rainure circonférentielle (3000) étant engagée par une première poulie (20) qui s'étend à partir du tas de forgeage (2) respectif, le tas de forgeage (2) étant pourvu à son extrémité d'une seconde poulie (22) qui engage la surface circonférentielle excentrique (320) sur l'arbre (32) de l'engrenage (30) respectif.

3. Dispositif selon la revendication 1 ou 2, **caractérisé en ce que** l'entraînement (31) comprend un moteur rotatif (310) relié par une boîte de vitesses (311) à un engrenage d'entraînement (312) qui est monté de manière rotative dans le disque porteur (1) et s'engage avec un engrenage (30) par ses dents extérieures.

4. Dispositif selon l'une des revendications de 1 à 3, **caractérisé en ce que** le disque porteur (1) est divisé en deux parties (11, 12), rabattantes l'une par rapport à l'autre sur une articulation (13) disposée à une extrémité du plan de division (A) des deux parties (11, 12), tandis qu'à l'extrémité opposée du plan de division (A) des deux parties (11, 12) chaque partie (11, 12) du disque porteur (1) est pourvue d'une partie du noeud de verrouillage (14).

5. Dispositif selon la revendication 4, **caractérisé en ce que** l'articulation (13) comprend une paire d'oeillets (130, 131), chacun étant disposé sur l'une des parties (11, 12) du disque porteur (1), tandis qu'une goupille (132) commune est disposée dans les oeillets, tandis que la partie inférieure (11) du disque porteur (1) est montée sur le cadre (0) du dispositif et la partie supérieure (12) du disque porteur (1) est rabattable au niveau de l'articulation (13) vers le haut à partir du plan de division (A).

6. Dispositif selon la revendication 4, **caractérisé en ce que** le noeud de verrouillage (14) comprend deux ou trois protubérances tangentielles (110, 120) des deux parties (11, 12) du disque porteur (1) qui se chevauchent, tandis que ces protubérances tangentielles (110, 120) sont pourvues d'un trou traversant (1100, 1200) disposé radialement auquel est associée une goupille de verrouillage (140) couplée à un actionneur de verrouillage (141).

7. Dispositif selon l'une des revendications de 1 à 6, **caractérisé en ce qu'**un nombre pair de tas de forgeage (2) est disposé symétriquement dans le disque porteur (1) autour de l'ouverture centrale (10), les tas de forgeage sont couplés à un nombre pair d'engrenages (30), tandis que dans chaque partie (11, 12) du disque porteur (1) est disposé la moitié du nombre de tas de forgeage (2) et la moitié du nombre d'engrenages (30), tandis que le disque porteur (1) est divisé en parties symétriques (11, 12).

8. Dispositif selon l'une des revendications de 1 à 6, **caractérisé en ce que** dans le disque porteur (1) est disposé de manière symétrique autour de l'ouverture centrale (10) un nombre impair de tas de forgeage (2) couplés à un nombre impair d'engrenages (30), tandis que chaque partie (11, 12) du disque porteur (1) comporte un nombre différent de tas de forgeage (2) et un nombre différent d'engrenages (30), tandis que le disque porteur (1) est divisé en parties asymétriques (11, 12).
